# EUROPEAN PATENT SPECIFICATION

(11) **EP 4 258 449 B1**
(45) Date of publication and mention of the grant of the patent: **23.09.2026**
(21) Application number: 22893311.5
(22) Date of filing: 14.11.2022
(51) Int. Cl.: H01M 50/443, H01M 50/44, H01M 50/414, H01M 50/489

(54) **SEPARATOR FOR SECONDARY BATTERY AND SECONDARY BATTERY INCLUDING SAME**
SEPARATOR FÜR SEKUNDÄRBATTERIE UND SEKUNDÄRBATTERIE DAMIT
SÉPARATEUR POUR BATTERIE SECONDAIRE ET BATTERIE SECONDAIRE LE COMPRENANT

(30) Priority: 15.11.2021 KR 20210157028
(43) Date of publication of application: 11.10.2023
(73) Proprietor: LG Energy Solution, Ltd., Seoul 07335 (KR)
(72) Inventor: LEE, Jung Pil, Daejeon 34122 (KR); RYU, Ji Hoon, Daejeon 34122 (KR); KIM, Dong Kyu, Daejeon 34122 (KR)
(74) Representative: Hoffmann Eitle
(86) International application number: PCT/KR2022/017905
(87) International publication number: WO 2023/085892

(56) References cited:
- JP-A- 2005 302 341
- JP-A- 2006 351 365
- JP-A- 2015 191 886
- KR-A- 20120 001 809
- KR-A- 20120 052 100
- KR-A- 20140 070 199
- KR-A- 20140 147 413
- KR-A- 20160 011 531
- KR-A- 20180 075 003

## Description

### Technical Field

This application claims the benefit of priority to Korean Patent Application No. 2021-0157028 filed on November 15, 2021.

The present invention relates to a separator for a secondary battery and a secondary battery including the same. More particularly, the present invention relates to a separator for a secondary battery configured such that a heat-resistant polymer is introduced into a porous separator, whereby thermal properties of the separator are improved, and a secondary battery including the same.

### Background Art

For a lithium secondary battery, a separator is interposed between a positive electrode and a negative electrode in order to prevent short circuit due to contact between the positive electrode and the negative electrode. Heat may be generated in the lithium secondary battery during normal charging and discharging, and short circuit between the positive electrode and the negative electrode may occur due to external impact. In order to improve heat resistance of the separator, a coating layer including an inorganic material is added to an outer surface of a separator substrate configured to have a porous structure.

However, the lithium secondary battery has a problem related to safety due to side reaction of an electrolytic solution at a high temperature and a shortcoming, such as low output, and there is an increasing necessity for technology capable of being an alternative thereto.

Also, in order to achieve high energy density of a secondary battery, attempts to manufacture a separator having a small thickness have been made. In addition, various research to increase the strength of the separator and to reduce thermal shrinkage of the separator in order to prevent the occurrence of internal short circuit has been conducted.

In connection therewith, Patent Document 1 discloses a separator for electronic parts including a porous substrate made of a material having a melting point of 180°C or higher and a resin structure provided on at least one surface of the porous substrate and/or in the porous substrate, wherein filler particles having a melting point of 180°C or higher or substantially having no melting point are contained in the separator.

Patent Document 1 provides a separator for electronic parts configured such that thermal shrinkage of the separator is very small at the time of overheating and reliability of the separator is high. In the separator of Patent Document 1, however, the porous resin structure is added onto the porous substrate to form an integrated structure. As a result, it is difficult to manufacture a thin separator, and therefore it is difficult to manufacture a secondary battery having improved energy density.

Patent Document 2 discloses a separator for a secondary battery configured to have a structure in which baroplastic polymer powder is inserted into pores of a porous non-woven fabric substrate and the pores are clogged by pressing at the time of assembling a secondary battery.

The separator for a secondary battery of Patent Document 2 may be interposed between a positive electrode and a negative electrode and pressing may be performed through a hot pressing process, whereby it is possible to prevent the baroplastic polymer powder from being separated from the porous non-woven fabric substrate and to secure the force of binding between the separator and the electrode.

In the separator of Patent Document 2, a part of the baroplastic polymer may be melted at a high temperature less than 200°C, whereby the pores of the porous non-woven fabric substrate may be clogged, and therefore it is possible to prevent internal short circuit. In this case, however, it is difficult to secure the strength of the separator, since the baroplastic polymer is melted.

Therefore, there is a high necessary for technology capable of securing the strength and thermal shrinkage of a separator while reducing the overall thickness of the separator not by adding a coating layer to an outer surface of a separator substrate.

### ∘Prior Art Documents

(Patent Document 1: Japanese Patent Application Publication No. 2005-302341 (2005.10.27)
Patent Document 2: Korean Patent Application Publication No. 2018-0075003 (2018.07.04)
Patent Document 3: Japanese Patent Application Publication No. 2013-145717

JP 2015-191886 A discloses a separator comprising a porous substrate and a porous coating layer. The porous substrate comprises a filler which can be organic particles.

JP 2006-351365 A discloses a separator comprising a porous film which comprises a resin having a melting point of 170°C or higher and fine particles.

### Disclosure

### Technical Problem

The present invention has been made in view of the above problems, and it is an object of the present invention to provide a separator for a secondary battery configured such that a highly heat-resistant particle type polymer is embedded in a separator body having a porous structure, whereby the strength of the separator is increased and excellent heat resistance properties of the separator are secured while an increase in overall thickness of the separator is minimized, and a secondary battery including the same.

### Technical Solution

A separator for a secondary battery according to the present invention to accomplish the above object includes a separator body having a porous structure and a particle type polymer embedded in the separator body, wherein the particle type polymer includes a material having a heat resistance higher than a heat resistance of the separator body; the particle type polymer comprises at least one of polyethylene terephthalate, polyimide, polyamide, polysulfone, polyether ether ketone, polyphenylene sulfide, polytetrafluoroethylene, polyetherimide, and polyamide-imide, each of which has a higher glass transition temperature (T_{g}) or melting point (Tₘ) than a material of the separator body; and the thickness of the separator body having the particle type polymer embedded therein is equal to the thickness of the separator body comprising no particle type polymer.

The separator body may include a porous membrane or non-woven fabric.

At least a part of the particle type polymer may be inserted into pores of the separator body.

The weight of the particle type polymer may be 10% by weight to 80% by weight of the weight of the separator body.

The volume of the particle type polymer may be 10% by volume to 80% by volume of the total pore volume of the separator body.

An increase in permeability of the separator body having the particle type polymer embedded in the separator body may be less than 30% based on permeability of the separator body alone.

The size of each pore of the separator body may be 110% to 1,000% of the particle size of the particle type polymer.

The separator body may include at least one selected from the group consisting of polyolefin, polyethylene terephthalate, polybutylene terephthalate, polyester, polyacetal, polyamide, polycarbonate, polyimide, polyether ether ketone, polyethersulfone, polyphenylene oxide, polyphenylene sulfide, polyacrylonitrile, cellulose, polyethylene naphthalene, and a mixture thereof.

The present invention provides a secondary battery including the separator for a secondary battery.

In addition, the present invention may provide various combinations of the above solving means.

### Advantageous Effects

As is apparent from the above description, a separator for a secondary battery according to the present invention is configured such that a particle type polymer is inserted into pores of a separator body having a porous structure. When comparing the separator body including the particle type polymer to the separator body including no particle type polymer, therefore, it is possible to manufacture a thin separator having a minimized increase in thickness thereof.

In addition, the particle type polymer is made of a material that exhibits excellent heat resistance, whereby it is possible to manufacture a separator with improved thermal shrinkage.

In addition, the particle type polymer is embedded in the separator body having the porous structure, whereby it is possible to increase the strength of the separator.

### Best Mode

Now, preferred embodiments of the present invention will be described in detail such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

A separator for a secondary battery according to the present invention includes a separator body configured to have a porous structure and a particle type polymer embedded in the separator body, wherein the particle type polymer is made of a material having a heat resistance higher than a heat resistance of the separator body.

Since the particle type polymer having a heat resistance higher than a heat resistance of the separator body is included, as described above, heat resistance may be further improved than when only the separator body is included, whereby thermal shrinkage of the separator at a high temperature may be reduced.

In addition, the separator body is configured to have the porous structure, and therefore at least a part of the particle type polymer that exhibits high heat resistance may be inserted into and located in pores of the separator body. Consequently, it is possible to provide a separator having a smaller thickness than a conventional separator configured to have a structure in which a coating layer is added to an outer surface of a separator substrate having a porous structure.

The separator body is a thin insulative membrane having high ionic permeability and mechanical strength, and, for example, a polyolefin-based porous membrane or non-woven fabric made of a polyolefin-based material may be used as the separator body; however, the present invention is not limited thereto.

As an example of the polyolefin-based porous membrane, there may be a membrane made of a polyolefin-based polymer, such as polyethylene, e.g. high-density polyethylene, linear low-density polyethylene, low-density polyethylene, or ultrahigh molecular weight polyethylene, polypropylene, polybutylene, or polypentene, alone or a mixture thereof.

As the material for the non-woven fabric, there may be non-woven fabric including at least one selected from the group consisting of polyethylene terephthalate, polybutylene terephthalate, polyester, polyacetal, polyamide, polycarbonate, polyimide, polyether ether ketone, polyethersulfone, polyphenylene oxide, polyphenylene sulfide, polyacrylonitrile, cellulose, polyethylene naphthalene, and a mixture thereof, in addition to the polyolefin-based material.

The non-woven fabric may be spunbond non-woven fabric consisting of filament fiber or melt-blown non-woven fabric.

The particle type polymer is made of a material having a heat resistance higher than a heat resistance of the separator body, and the material for the particle type polymer is at least one selected from the group consisting of polyethylene terephthalate, polyimide, polyamide, polysulfone, polyether ether ketone, polyphenylene sulfide, polytetrafluoroethylene, polyetherimide, and polyamide-imide, each of which has a higher glass transition temperature T_{g} or melting point Tₘ than the material for the separator body.

The weight of the particle type polymer may be set in consideration of the pore volume, permeability, etc. of the separator body. Specifically, the weight of the particle type polymer may be 10% to 80%, more specifically 20% to 30%, of the weight of the separator body.

If the weight of the particle type polymer is less than 10% of the weight of the separator body, it is difficult to achieve a thermal shrinkage improvement effect. If the weight of the particle type polymer is greater than 80% of the weight of the separator body, ionic conductivity may become a problem, which is undesirable.

At least a part or the entirety of the particle type polymer is inserted into and disposed in pores of the separator body, and the volume of the particle type polymer may be 10% to 80% of the total pore volume of the separator body.

If the volume of the particle type polymer is less than 10% of the total pore volume of the separator body, it is difficult to achieve a heat resistance improvement effect. If the volume of the particle type polymer is greater than 80% of the total pore volume of the separator body, problems of ionic conductivity reduction and resistance increase may occur, which is undesirable.

In the present invention, as described above, at least a part of the particle type polymer is inserted into the pores of the separator body. When the entirety of the particle type polymer is inserted into the pores of the separator body, the thickness of the separator body including no particle type polymer and the thickness of the separator body including the particle type polymer may be equal to each other.

The size of each pore of the separator body may be 110% to 1,000% of the particle size of the particle type polymer. As the particle type polymer is inserted into the pores of the separator body, the pore size of the separator body may be uniform. Consequently, electrolytic solution impregnability and ionic conductivity in the entirety of the separator may be uniform.

The weight ratio of the particle type polymer to a solvent may be 1:1 to 1:10.

In addition, the solution may further include a dispersant configured to uniformly disperse the particle type polymer. For example, the dispersant may be made of any one selected from the group consisting of polyvinylpyrrolidone, polyacrylic acid hydrazide, poly-N-vinyl-5-methoxazolidon, N-alkyl polyimine, polyvinyl alcohol, N-acetyl polyimine, polyacrylamide, poly-L-lysin hydrobromide, polyacrolein, benzyl-dodecyldimethylammonium chloride, polyacrylic acid, polyethylenimine, 4-vinylpyridine, and methylvinylketone or an oligomer thereof.

Hereinafter, the present invention will be described with reference to the following examples. These examples are provided only for easier understanding of the present invention and should not be construed as limiting the scope of the present invention.

### <Example 1>

Polyether ether ketone (PEEK), as a particle type polymer, was introduced into acetone to manufacture a particle type polymer dispersion.

A polyolefin (PO) porous separator body made of non-woven fabric was coated with the particle type polymer solution using a doctor blade coating method to manufacture a separator.

The separator was pressed using a pressing roll to manufacture a separator configured to have a structure in which the particle type polymer was inserted into pores of the separator body.

The thickness of the separator thus manufactured was equal to the thickness of the separator body.

Coating was performed such that the weight of polyether ether ketone was 20% of the weight of the separator body.

### <Example 2>

A separator was manufactured using the same method as in Example 1 except that coating was performed such that the weight of polyether ether ketone, as the particle type polymer, was 30% of the weight of the separator body.

### <Example 3>

A separator was manufactured using the same method as in Example 1 except that coating was performed such that the weight of polyphenylene sulfide, as the particle type polymer, was 20% of the weight of the separator body.

### <Comparative Example 1>

A separator made of stretched polyolefin (PO) was used alone as a separator.

### <Comparative Example 2>

The separator body used in Example 1 was used alone as a separator.

### <Comparative Example 3>

A separator was manufactured using the same method as in Example 1 except that coating was performed such that the weight of polyvinylidene fluoride (PVDF) was 20% of the weight of the separator body, instead of coating with the particle type polymer dispersion.

### <Experimental Example 1> Measurement of permeability

Permeability was measured using a permeability measurement instrument (Asahi Seiko, EGO-IT) according to JIS P8117.

**[Table 1]**

| | | Permeability (s/100 ml) |
|---|---|---|
| Example 1 | PEEK 20%, PO Non-woven fabric | 83 |
| Example 2 | PEEK 30%, PO Non-woven fabric | 94 |
| Example 3 | PPS 20%, PO Non-woven fabric | 85 |
| Comparative Example 1 | Stretched PO alone | 160 |
| Comparative Example 2 | PO Non-woven fabric | 75 |
| Comparative Example 3 | PVDF 20%, PO Non-woven fabric | 128 |

When comparing Comparative Example 1 and Comparative Example 2 to each other, the measured permeability of Comparative Example 2 was less than the measured permeability of Comparative Example 1, since the pore size of non-woven fabric was greater than the pore size of the stretched separator.

When comparing Examples to Comparative Example 2, the difference in permeability among Examples was not great even though the particle type polymer was inserted into the pores of non-woven fabric. The reason for this is that, since the polymer added to the separator is the particle type polymer, none of the pore channels are clogged.

In contrast, for Comparative Example 3, in which no particle type polymer was used, permeability is high, since some or many of the pore channels are clogged.

When comparing permeability of the separator body having the particle type polymer embedded therein to permeability of the separator body alone, as in Comparative Example 2, therefore, it can be seen that an increase in permeability is less than 30%.

In contrast, when coating is performed with polyvinylidene fluoride, not the particle type polymer, as in Comparative Example 3, it can be seen that permeability increases by about 70% or more based on permeability of the separator body alone, as in Comparative Example 2, and therefore reduction in ionic conductivity and resistance increase may become a problem.

### <Experimental Example 2> Measurement of thermal shrinkage

Samples each having an overall length of 65 mm, an overall width of 40.5 mm, and an area of 2,632.5 mm² were prepared and were thermally shrunk at 130°C and 150°C for 30 minutes. After thermal shrinkage processing, the area of each of the samples was measured, and an area reduction ratio was calculated as shrinkage.

**[Table 2]**

| | | 130°C, 30 min | | | | 150°C, 30 min | | | |
|---|---|---|---|---|---|---|---|---|---|
| | | Overall length (mm) | Overall width (mm) | Area (mm²) | Shrinkage (%) | Overall length | Overall width | Area | Shrinkage (%) |
| Example 1 | PEEK 20%, PO Non-woven fabric | 65 | 40.5 | 2,632.5 | 0.0 | 63.5 | 40 | 2,540 | 3.5 |
| Example 2 | PEEK 30%, PO Non-woven fabric | 65 | 40.5 | 2,632.5 | 0.0 | 64.0 | 40 | 2,560 | 2.8 |
| Example 3 | PPS 20%, PO Non-woven fabric | 65 | 40.5 | 2,632.5 | 0.0 | 63 | 39.8 | 2,507 | 4.8 |
| Comparative Example 1 | Stretched PO alone | 57 | 32 | 1,824.0 | 30.7 | 14 | 9 | 126 | 95.2 |
| Comparative Example 2 | PO Non-woven fabric | 65 | 40.5 | 2,632.5 | 0.0 | 61.5 | 38.5 | 2,367.8 | 10.1 |
| Comparative Example 3 | PVDF 20%, PO Non-woven fabric | 65 | 40.5 | 2,632.5 | 0.0 | 62 | 39 | 2,418 | 8.1 |

When comparing Comparative Example 1 and Comparative Example 2 to each other, the thermal shrinkage property of non-woven fabric is better than the thermal shrinkage property of the stretched separator. The reason for this is that a stretched product naturally returns to the state before processing when exposed to heat due to residual stress remaining after manufacture thereof. In contrast, the thermal shrinkage property of non-woven fabric is basically excellent, since no stress is applied to non-woven fabric at the time of manufacture.

Consequently, it can be seen that, for Examples 1 to 3, in which non-woven fabric was used as the separator body and the particle type polymer having excellent heat resistance was used, thermal shrinkage remarkably increases.

In contrast, it can be seen that, for Comparative Example 3, in which the polymer having a low glass transition temperature T_{g} or melting point Tₘ was used, improvement in thermal shrinkage is insignificant compared to Comparative Example 2, in which only non-woven fabric was used.

When a particle type polymer that exhibits high heat resistance is inserted into a separator body made of non-woven fabric, as in the present invention, therefore, it is possible to provide a separator with remarkably improved heat resistance.

Those skilled in the art to which the present invention pertains will appreciate that various applications and modifications are possible within the category of the present invention based on the above description.

## Claims

1. A separator for a secondary battery, the separator comprising:
a separator body having a porous structure; and
a particle type polymer embedded in the separator body;
wherein
the particle type polymer comprises a material having a heat resistance higher than a heat resistance of the separator body;
the particle type polymer comprises at least one of polyethylene terephthalate, polyimide, polyamide, polysulfone, polyether ether ketone, polyphenylene sulfide, polytetrafluoroethylene, polyetherimide, and polyamide-imide, each of which has a higher glass transition temperature (T_{g}) or melting point (Tₘ) than a material of the separator body; and
the thickness of the separator body having the particle type polymer embedded therein is equal to the thickness of the separator body comprising no particle type polymer.

2. The separator according to claim 1, wherein the separator body comprises a porous membrane or non-woven fabric.

3. The separator according to claim 1, wherein at least a part of the particle type polymer is inserted into pores of the separator body.

4. The separator according to claim 1, wherein the weight of the particle type polymer is 10% by weight to 80% by weight of the weight of the separator body.

5. The separator according to claim 1, wherein the volume of the particle type polymer is 10% by volume to 80% by volume of the total pore volume of the separator body.

6. The separator according to claim 1, wherein an increase in permeability of the separator body having the particle type polymer embedded therein is less than 30% based on the permeability of the separator body alone, as determined by the method set out in the description.

7. The separator according to claim 1, wherein the size of each pore of the separator body is 110% to 1,000% of the particle size of the particle type polymer.

8. The separator according to claim 1, wherein the separator body comprises at least one of polyolefin, polyethylene terephthalate, polybutylene terephthalate, polyester, polyacetal, polyamide, polycarbonate, polyimide, polyether ether ketone, polyethersulfone, polyphenylene oxide, polyphenylene sulfide, polyacrylonitrile, cellulose, and polyethylene naphthalene.

9. A secondary battery comprising the separator according to any one of claims 1 to 8.

## Patentansprüche

1. Ein Separator für eine Sekundärbatterie, wobei der Separator umfasst:
einen Separatorkörper mit einer porösen Struktur;
und
ein in den Separatorkörper eingebettetes partikelartiges Polymer;
wobei
das partikelartige Polymer ein Material umfasst, dessen Wärmebeständigkeit höher ist als die Wärmebeständigkeit des Separatorkörpers;
das partikelartige Polymer umfasst mindestens eines aus Polyethylenterephthalat, Polyimid, Polyamid, Polysulfon, Polyetheretherketon, Polyphenylensulfid, Polytetrafluorethylen, Polyetherimid und Polyamidimid, von denen jedes eine höhere Glasübergangstemperatur (T_{g}) oder einen höheren Schmelzpunkt (Tₘ) aufweist als ein Material des Separatorkörpers; und
die Dicke des Separatorkörpers, in den das partikelartige Polymer eingebettet ist, der Dicke des Separatorkörpers entspricht, der kein partikelartiges Polymer enthält.

2. Separator gemäß Anspruch 1, wobei der Separatorkörper eine poröse Membran oder ein Vlies (non-woven fabric) umfasst.

3. Separator gemäß Anspruch 1, wobei zumindest ein Teil des partikelartigen Polymers in die Poren des Separatorkörpers eingebracht ist.

4. Separator gemäß Anspruch 1, wobei das Gewicht des partikelartigen Polymers 10 Gew.-% bis 80 Gew.-% des Gewichts des Separatorkörpers beträgt.

5. Separator gemäß Anspruch 1, wobei das Volumen des partikelartigen Polymers 10 Vol.-% bis 80 Vol.-% des gesamten Porenvolumens des Separatorkörpers beträgt.

6. Separator gemäß Anspruch 1, wobei die Zunahme der Durchlässigkeit des Separatorkörpers, in den das partikelartige Polymer eingebettet ist, weniger als 30 % beträgt, bezogen auf die Durchlässigkeit des Separatorkörpers allein, bestimmt nach dem in der Beschreibung dargelegten Verfahren.

7. Separator gemäß Anspruch 1, wobei die Größe jeder Pore des Separatorkörpers 110 % bis 1.000 % der Partikelgröße des partikelartigen Polymers beträgt.

8. Separator gemäß Anspruch 1, wobei der Separatorkörper umfasst mindestens eines aus Polyolefin, Polyethylenterephthalat, Polybutylenterephthalat, Polyester, Polyacetal, Polyamid, Polycarbonat, Polyimid, Polyetheretherketon, Polyethersulfon, Polyphenylenoxid, Polyphenylensulfid, Polyacrylnitril, Cellulose und Polyethylennaphthalin.

9. Sekundärbatterie, die den Separator gemäß mindestens einem der Ansprüche 1 bis 8 umfasst.

## Revendications

1. Séparateur pour une batterie secondaire, le séparateur comprenant :
un corps de séparateur présentant une structure poreuse ; et
un polymère de type particulaire incorporé dans le corps de séparateur ;
dans lequel
le polymère de type particulaire comprend un matériau présentant une résistance à la chaleur supérieure à une résistance à la chaleur du corps de séparateur ;
le polymère de type particulaire comprend au moins un parmi un polyéthylène téréphtalate, un polyimide, un polyamide, une polysulfone, une polyéther éther cétone, un sulfure de polyphénylène, un polytétrafluoroéthylène, un polyétherimide et un polyamide-imide, dont chacun présente une température de transition vitreuse (T_{g}) ou un point de fusion (Tₘ) plus élevé(e) qu'un matériau du corps de séparateur ; et
l'épaisseur du corps de séparateur présentant le polymère de type particulaire incorporé dans celui-ci est égale à l'épaisseur du corps de séparateur ne comprenant aucun polymère de type particulaire.

2. Séparateur selon la revendication 1, dans lequel le corps de séparateur comprend une membrane poreuse ou un tissu non tissé.

3. Séparateur selon la revendication 1, dans lequel au moins une partie du polymère de type particulaire est insérée dans des pores du corps de séparateur.

4. Séparateur selon la revendication 1, dans lequel le poids du polymère de type particulaire est de 10 % en poids à 80 % en poids du poids du corps de séparateur.

5. Séparateur selon la revendication 1, dans lequel le volume du polymère de type particulaire est de 10 % en volume à 80 % en volume du volume total des pores du corps de séparateur.

6. Séparateur selon la revendication 1, dans lequel une augmentation de la perméabilité du corps de séparateur présentant le polymère de type particulaire incorporé dans celui-ci est inférieure à 30 % sur la base de la perméabilité du corps de séparateur seul, telle que déterminée par le procédé exposé dans la description.

7. Séparateur selon la revendication 1, dans lequel la taille de chaque pore du corps de séparateur est de 110 % à 1 000 % de la taille de particule du polymère de type particulaire.

8. Séparateur selon la revendication 1, dans lequel le corps de séparateur comprend au moins un parmi une polyoléfine, un polyéthylène téréphtalate, un polybutylène téréphtalate, un polyester, un polyacétal, un polyamide, un polycarbonate, un polyimide, une polyéther éther cétone, une polyéthersulfone, un oxyde de polyphénylène, un sulfure de polyphénylène, un polyacrylonitrile, une cellulose et un polyéthylène naphtalène.

9. Batterie secondaire comprenant le séparateur selon l'une quelconque des revendications 1 à 8.
